# EUROPÄISCHE PATENTSCHRIFT

(11) **EP 3 322 620 B1**
(45) Veröffentlichungstag und Bekanntmachung des Hinweises auf die Patenterteilung: **19.06.2019**
(21) Anmeldenummer: 16733437.4
(22) Anmeldetag: 27.06.2016
(51) Int. Cl.: B60T 13/66

(54) **VORRICHTUNG UND VERFAHREN ZUM ANSTEUERN EINER ENDSTUFE FÜR EINEN AKTUATOR IN EINEM FAHRZEUG**
DEVICE AND METHOD FOR CONTROLLING AN END STAGE FOR AN ACTUATOR IN A VEHICLE
DISPOSITIF ET PROCÉDÉ DE COMMANDE D'UN ÉTAGE FINAL POUR UN ACTIONNEUR DANS UN VÉHICULE

(30) Priorität: 25.06.2015 DE 102015110230
(43) Veröffentlichungstag der Anmeldung: 23.05.2018
(73) Patentinhaber: KNORR-BREMSE Systeme für Nutzfahrzeuge GmbH, 80809 München (DE)
(72) Erfinder: SCHOLL, Frank, 74379 Ingersheim (DE); FEUCHT, Thomas, 71299 Wimsheim (DE); HERRMANN, Günter, 70569 Stuttgart (DE)
(86) Internationale Anmeldenummer: PCT/EP2016/064789
(87) Internationale Veröffentlichungsnummer: WO 2016/207417

(56) Entgegenhaltungen:
- CA-A1- 2 926 114
- DE-A1-102004 049 082
- DE-A1-102011 089 995

## Beschreibung

Die vorliegende Erfindung bezieht sich auf eine Vorrichtung und ein Verfahren zum Ansteuern einer Endstufe für einen Aktuator in einem Fahrzeug, insbesondere eines Magnetventils, sowie auf eine Aktuatorschaltung für ein Fahrzeug.

Bei einer Fehlfunktion eines Steuergeräts eines Fahrzeugs müssen die vom Steuergerät aktivierbaren Aktuatoren, i. d. R. Magnetventile, von Überwachungseinrichtungen in einen sicheren Zustand versetzt werden.

Die DE 10 2011 089995 A1 offenbart eine Vorrichtung zum Ansteuern einer Endstufe für einen Aktuator für ein Fahrzeug. Die Vorrichtung ist ausgebildet, um ein Auslösesignal und ein Freigabesignal von einer Freigabeeinrichtung zu empfangen und basierend auf diesen Signalen wird der Aktuator mittels eines Sperrsignals gesperrt oder nicht gesperrt. Das Sperrsignal weist zwei Zustände auf, wenn der Aktuator entweder gesperrt werden soll oder nicht gesperrt werden soll. Eine Auslöselogik ist ausgebildet, um basierend auf den Signalen eine Auslöseentscheidung zu treffen und ein Auslösesignal an den Aktuator auszugeben um die Endstufe anzusteuern.

Es ist die Aufgabe der vorliegenden Erfindung eine verbesserte Vorrichtung und ein verbessertes Verfahren zum Ansteuern einer Endstufe für einen Aktuator für ein Fahrzeug sowie eine verbesserte Aktuatorschaltung zu schaffen.

Diese Aufgabe wird durch eine Vorrichtung und ein Verfahren zum Ansteuern einer Endstufe für einen Aktuator für ein Fahrzeug sowie eine Aktuatorschaltung gemäß den Hauptansprüchen gelöst.

Der erfindungsgemäße Ansatz ermöglicht es, mehrere Überwachungseinrichtungen und das Signal einer Applikationseinrichtung, beispielsweise eines Applikationsrechners, logisch zu verknüpfen, beispielsweise unter Verwendung einer UND-Verknüpfung, um eine Ansteuerung einer Endstufe für einen Aktuator freizugeben oder zu unterbinden. Gemäß einer Ausführungsform kann die dabei eingesetzte Verknüpfung so realisiert werden, dass die Überwachungseinrichtung auch bei Ausfall eines Elements in der Verknüpfung nach wie vor wirksam eingreifen kann, um beispielsweise die Ansteuerung der Endstufe zu unterbinden. Gemäß einer Ausführungsform kann die die Verknüpfung so gestaltet werden, dass jeder Ausfall zu einem sicheren Zustand führt, in dem beispielsweise die Ansteuerung der Endstufe unterbunden wird.

Der erfindungsgemäße Ansatz kann im Zusammenhang mit einer Sicherheitsschaltung für eine oder mehrere Endstufen eingesetzt werden.

Eine entsprechende Vorrichtung zum Ansteuern einer Endstufe für einen Aktuator, insbesondere eines Magnetventils, für ein Fahrzeug, weist in einer einfachen Ausführungsform die folgenden Merkmale auf:
einen Freigabeanschluss zum Empfangen eines Freigabesignals über eine Schnittstelle zu einer Applikationseinrichtung, wobei das Freigabesignal einen Freigabezustand zum Freigeben einer Ansteuerung der Endstufe und einen Sperrzustand zum Sperren der Ansteuerung der Endstufe annehmen kann;
einen Unterbindungsanschluss zum Empfangen eines Unterbindungssignals über eine Schnittstelle zu einer Überwachungseinrichtung, wobei das Unterbindungssignal einen Zulassungszustand zum Zulassen der Ansteuerung der Endstufe und einen Unterbindungszustand zum Unterbinden der Ansteuerung der Endstufe annehmen kann;
einen Ausgangsanschluss als eine Schnittstelle zu der Endstufe; und
eine Verknüpfungseinrichtung, die ausgebildet ist, um ein Ansteuersignal zum Ansteuern der Endstufe an Ausgangsanschluss bereitzustellen, wenn das Freigabesignal den Freigabezustand und das Unterbindungssignal den Zulassungszustand aufweist.

Die Anzahl der Anschlüsse kann gemäß unterschiedlicher Ausführungsformen beliebig erweitert werden, beispielsweise um zusätzliche Freigabesignale verarbeiten zu können. Ferner kann die Vorrichtung zum Ansteuern einer beliebigen Anzahl von Endstufen und/oder Aktuatoren eingesetzt werden. Somit können mehrere Freigabeanschlüsse vorgesehen sein, die auf mehrere, insbesondere auch auf beliebig viele Aktuatoren wirken können.

Gemäß einer erweiteren Ausführungsform weist eine entsprechende Vorrichtung zum Ansteuern einer Endstufe für einen Aktuator die folgenden Merkmale auf:
einen Freigabeanschluss zum Empfangen eines Freigabesignals über eine Schnittstelle zu einer Applikationseinrichtung, wobei das Freigabesignal einen Freigabezustand zum Freigeben einer Ansteuerung der Endstufe und einen Sperrzustand zum Sperren der Ansteuerung der Endstufe annehmen kann;
einen ersten Unterbindungsanschluss zum Empfangen eines ersten Unterbindungssignals über eine Schnittstelle zu einer Überwachungseinrichtung, wobei das erste Unterbindungssignal einen ersten Zulassungszustand zum Zulassen der Ansteuerung der Endstufe und einen ersten Unterbindungszustand zum Unterbinden der Ansteuerung der Endstufe annehmen kann;
einen zweiten Unterbindungsanschluss zum Empfangen eines zweiten Unterbindungssignals über eine Schnittstelle zu einer zweiten Überwachungseinrichtung, wobei das zweite Unterbindungssignal einen zweiten Zulassungszustand zum Zulassen der Ansteuerung des Aktuators und einen zweiten Unterbindungszustand zum Unterbinden der Ansteuerung des Aktuators annehmen kann;
einem Ausgangsanschluss als eine Schnittstelle zu der Endstufe; und
eine Verknüpfungseinrichtung, die ausgebildet ist, um ein Ansteuersignal zum Ansteuern der Endstufe an Ausgangsanschluss bereitzustellen, wenn das Freigabesignal den Freigabezustand, das erste Unterbindungssignal den ersten Zulassungszustand und das zweite Unterbindungssignal den zweiten Zulassungszustand aufweist.

Der Aktuator kann Teil eines pneumatischen, hydraulischen oder elektrischen Systems, beispielsweise eines Bremssystems, des Fahrzeugs sein. Unter einem Aktuator kann ein i Magnetventil oder ein Drucksteuerventil oder allgemein eine Last verstanden werden. Der Aktuator wird mithilfe der Endstufe eingeschaltet. Unter den genannten Signalen können elektrische Signale verstanden werden. Somit kann es sich bei den Anschlüssen um elektrische Kontakte handeln.

Die Vorrichtung kann gegebenenfalls weitere Unterbindungsanschlüsse zum Empfangen weiterer Unterbindungssignale über eine Schnittstelle zu weiteren Überwachungseinrichtungen aufweisen, wobei die weiteren Unterbindungssignale weitere Zulassungszustände zum Zulassen der Ansteuerung der Endstufe und weitere Unterbindungszustände zum Unterbinden der Ansteuerung der Endstufe annehmen können.

Die Endstufe kann ausgebildet sein, um ansprechend auf einen Empfang des Ansteuersignals betätigt zu werden, beispielsweise von einem Zustand in einen anderen Zustand versetzt werden. Dabei kann einer der Zustände der Endstufe einen Ruhezustand und der andere der Zustände einen aktiven Zustand, oder es können beide Zustände Ruhezustände bzw. aktive Zustände darstellen. Gemäß einer Ausführungsform kann die Endstufe durch die Ansteuerung aktiviert werden. In diesem Fall kann das Ansteuersignal ein zur Aktivierung der Endstufe geeignetes Signal darstellen.

Gemäß einer Ausführungsform ist die Verknüpfungseinrichtung so ausgeführt, dass bei einem innerhalb der Verknüpfungseinrichtung auftretenden Fehler die Bereitstellung des Ansteuersignals verhindert wird. Auf diese Weise kann eine unerwünschte Ansteuerung der Endstufe wirksam verhindert werden.

Vorteilhafterweise kann unter Verwendung der genannten Vorrichtung sichergestellt werden, dass das Ansteuersignal nur dann bereitgestellt wird, wenn sowohl das Freigabesignal als auch alle Unterbindungssignale definierte vorbestimmte Zustände aufweisen.

Die Verknüpfungseinrichtung kann dementsprechend ausgebildet sein, um das Ansteuersignal nicht bereitzustellen, wenn das Freigabesignal den Sperrzustand aufweist. Ferner kann die Verknüpfungseinrichtung ausgebildet sein, um das Ansteuersignal nicht bereitzustellen, wenn das erste Unterbindungssignal den ersten Unterbindungszustand aufweist. Ferner kann die Verknüpfungseinrichtung ausgebildet sein, um das Ansteuersignal nicht bereitzustellen, wenn gegebenenfalls das zweite und/oder weitere Unterbindungssignale den zweiten und/oder gegebenenfalls weitere Unterbindungszustände aufweisen. Vorteilhafterweise kann die Bereitstellung des Ansteuersignals und somit die Ansteuerung der Endstufe auf diese Weise durch ein beliebiges der Signale verhindert werden.

Beispielsweise kann der Freigabezustand des Freigabesignals einen ersten logischen Zustand, der Sperrzustand des Freigabesignals einen zweiten logischen Zustand, die Zulassungszustände der Unterbindungssignale den zweiten logischen Zustand und die Unterbindungszustände der Unterbindungssignale den ersten logischen Zustand repräsentieren. Der erste logische Zustand kann durch "logisch Eins" und der zweite logische Zustand kann durch "logisch Null" definiert sein. Auf diese Weise kann die Verknüpfungseinrichtung einfach unter Verwendung digitaler Schaltungselemente realisiert werden. Durch die unterschiedlichen logischen Zustände von Zulassungssignalen werden ungewollte Zulassungszustände durch fehlerhaft gleichartige Ansteuersignale (beide log. 0 oder beide log.1) verhindert. Solche gleichartige fehlerhafte Signale sind wahrscheinlicher als ungleiche.

Gemäß einer Ausführungsform kann die Verknüpfungseinrichtung einen ersten Schalter, und gegebenenfalls einen zweiten und/oder weitere Schalter und einen letzten Schalter aufweisen. Dabei können der erste Schalter und gegebenenfalls der zweite und/oder die weiteren Schalter in Reihe zwischen dem Freigabeanschluss und einem Steueranschluss des letzten Schalters geschaltet sein. Der letzte Schalter kann zwischen einem Versorgungsspannungsanschluss zum Bereitstellen einer Versorgungsspannung zum Betreiben der Endstufe und dem Ausgangsanschluss geschaltet sein. Ein Steueranschluss des ersten Schalters kann mit dem ersten Unterbindungsanschluss verbunden sein. Ein Steueranschluss gegebenenfalls weiterer Schalter kann mit den jeweiligen weiteren Unterbindungsanschlüssen verbunden sein. Die Schalter können durch elektrische Bauelemente, beispielsweise durch Transistoren realisiert sein. Durch Anlegen eines geeigneten Signals an den Steueranschluss eines Schalters kann dieser Schalter geschaltet werden. Gemäß dieser Ausführungsform kann die Bereitstellung des Ansteuersignals einem Anlegen der Versorgungsspannung an der Endstufe entsprechen. Der Versorgungsspannungsanschluss kann ein Masseanschluss oder ein von einem Massepotenzial abweichendes Spannungspotenzial bereitstellender Anschluss sein. Unter Verwendung der genannten Elemente für die Verknüpfungseinrichtung kann sichergestellt werden, dass die Bereitstellung des Ansteuersignals verhindert wird, wenn eines der Elemente fehlerbehaftet ist.

Beispielsweise können der erste Schalter und gegebenenfalls der zweite und/oder weitere Schalter als Bipolartransistoren und der letzte Schalter als ein Feldeffekttransistor oder als ein Bipolartransistor ausgeführt sein. Somit kann die Verknüpfungseinrichtung unter Verwendung von Standardtransistoren aufgebaut werden.

Die Verknüpfungseinrichtung kann einen Widerstand umfassen, der zwischen dem Steueranschluss des letzten Schalters und dem Versorgungsspannungsanschluss geschaltet ist. Über den Widerstand kann der Steueranschluss des letzten Schalters auf ein elektrisches Potenzial gezogen werden, der die Bereitstellung des Ansteuersignals verhindert, wenn der Steueranschluss des letzten Schalters durch eine Öffnung des ersten oder gegebenenfalls zweiten und/oder weiteren Schalter von dem Freigabeanschluss getrennt wird.

Gemäß einer Ausführungsform kann die Verknüpfungseinrichtung eine erste Diode und eine zweite Diode aufweisen. Dabei können ein Sicherheitsschaltungsanschluss der Vorrichtung über die erste Diode mit dem ersten und/oder zweiten Unterbindungsanschluss und der dritte Anschluss über die zweite Diode mit dem Steueranschluss des zweiten Schalters verbunden sein. Auf diese Weise kann von der Verknüpfungseinrichtung ein weiteres Signal, beispielsweise ein Signal verarbeitet werden, über das die Bereitstellung des Ansteuersignals verhindert werden kann.

Somit kann die Vorrichtung einen Sicherheitsschaltungsanschluss zum Empfangen eines Signals aufweisen. Das Signal kann einen Blockierungszustand zum Blockieren der Ansteuerung der Endstufe annehmen. In diesem Fall kann die Verknüpfungseinrichtung ausgebildet sein, um das Ansteuersignal nicht bereitzustellen, wenn das Signal den Blockierungszustand aufweist. Somit kann die Bereitstellung des Ansteuersignals durch ein weiteres Signal verhindert werden. Gemäß einer Ausführungsform führt der Sicherheitsschaltungsanschluss zu einer entsprechenden Sicherheitsschaltung für die Bereitstellung der Versorgungsspannung der Endstufe oder der Endstufen für den positiven Anschluss der Aktuatoren.

Gemäß einer Ausführungsform kann die Vorrichtung zumindest einen weiteren Freigabeanschluss zum Empfangen eines weiteren Freigabesignals über eine weitere Schnittstelle zu der Applikationseinrichtung oder zu einer weiteren Applikationseinrichtung aufweisen, wobei das weitere Freigabesignal einen Freigabezustand zum Freigeben einer Ansteuerung einer weiteren Endstufe und einen Sperrzustand zum Sperren der Ansteuerung der weiteren Endstufe annehmen kann. Ferner kann die Vorrichtung einen weiteren Ausgangsanschluss als eine Schnittstelle zu der weiteren Endstufe aufweisen und die Verknüpfungseinrichtung kann ausgebildet sein, um ein weiteres Ansteuersignal zum Ansteuern der weiteren Endstufe an den weiteren Ausgangsanschluss bereitzustellen, wenn das weitere Freigabesignal den Freigabezustand, das erste Unterbindungssignal den ersten Zulassungszustand und das zweite Unterbindungssignal den zweiten Zulassungszustand aufweist. Vorteilhafterweise können auf diese Weise mehrere Ansteuersignale zum Ansteuern unterschiedlicher Endstufen oder unterschiedlicher Abschnitte einer Endstufe bereitgestellt werden.

Dazu kann die Verknüpfungseinrichtung einen weiteren ersten Schalter, einen weiteren zweiten Schalter und einen weiteren dritten Schalter aufweisen. Der weitere erste Schalter und der weitere zweite Schalter können in Reihe zwischen dem weiteren Freigabeanschluss und einem Steueranschluss des weiteren dritten Schalters geschaltet sein. Der weitere dritte Schalter kann zwischen dem Versorgungsspannungsanschluss zum Bereitstellen einer Versorgungsspannung zum Betreiben der weiteren Endstufe und dem weiteren Ausgangsanschluss geschaltet sein. Ein Steueranschluss des weiteren ersten Schalters kann mit dem ersten Unterbindungsanschluss verbunden sein und ein Steueranschluss des weiteren zweiten Schalters kann mit dem zweiten Unterbindungsanschluss verbunden sein. Auf diese Weise kann die Vorrichtung pro zusätzlichen Freigabeanschluss mit einem zusätzlichen Schaltungszweig ergänzt werden, der pro Unterbindungsanschluss je einen Transistor und einen zusätzlichen ausgangsseitigen Transistor aufweisen kann.

Entsprechend kann die Vorrichtung zumindest einen weiteren Unterbindungsanschluss zum Empfangen eines weiteren Unterbindungssignals über eine Schnittstelle zu einer weiteren Überwachungseinrichtung aufweisen. Das weitere Unterbindungssignal kann einen weiteren Zulassungszustand zum Zulassen der Ansteuerung der Endstufe und einen weiteren Unterbindungszustand zum Unterbinden der Ansteuerung der Endstufe annehmen. Die Verknüpfungseinrichtung kann ausgebildet sein, um das Ansteuersignal zum Ansteuern der Endstufe an den Ausgangsanschluss bereitzustellen, wenn ferner das weitere Unterbindungssignal den weiteren Zulassungszustand aufweist.

Ein Verfahren zum Ansteuern einer Endstufe für einen Aktuator, insbesondere eines Magnetventils, für ein Fahrzeug, umfasst die folgenden Schritte:
Empfangen eines Freigabesignals über eine Schnittstelle zu einer Applikationseinrichtung, wobei das Freigabesignal einen Freigabezustand zum Freigeben einer Ansteuerung der Endstufe und einen Sperrzustand zum Sperren der Ansteuerung der Endstufe annehmen kann;
Empfangen eines ersten Unterbindungssignals über eine Schnittstelle zu einer Überwachungseinrichtung, wobei das erste Unterbindungssignal einen ersten Zulassungszustand zum Zulassen der Ansteuerung der Endstufe und einen ersten Unterbindungszustand zum Unterbinden der Ansteuerung der Endstufe annehmen kann;
Empfangen eines zweiten Unterbindungssignals über eine Schnittstelle zu einer Spannungsüberwachungseinrichtung, wobei das zweite Unterbindungssignal einen zweiten Zulassungszustand zum Zulassen der Ansteuerung der Endstufe und einen zweiten Unterbindungszustand zum Unterbinden der Ansteuerung der Endstufe annehmen kann; und
Bereitstellen eines Ansteuersignals zum Ansteuern der Endstufe an einem als Schnittstelle zu der Endstufe dienenden Ausgangsanschluss, wenn das Freigabesignal den Freigabezustand, das erste Unterbindungssignal den ersten Zulassungszustand und das zweite Unterbindungssignal den zweiten Zulassungszustand aufweist.

Die Schritte des Verfahrens können beispielsweise unter Verwendung von Einrichtungen der genannten Vorrichtung zum Ansteuern einer Endstufe umgesetzt werden.

Eine entsprechende Aktuatorschaltung für ein Fahrzeug weist die folgenden Merkmale auf:
eine genannte Vorrichtung zum Ansteuern einer Endstufe für einen Aktuator;
eine Applikationseinrichtung zum Bereitstellen des Freigabesignals an den Freigabeanschluss der Vorrichtung;
eine Überwachungseinrichtung zum Bereitstellen des ersten Unterbindungssignals an den ersten Unterbindungsanschluss der Vorrichtung;
ggf. weitere Überwachungseinrichtungen, beispielsweise eine Spannungsüberwachungseinrichtung, zum Bereitstellen gegebenenfalls eines zweiten und/oder weiterer Unterbindungssignale an gegebenenfalls den zweiten und/oder die weiteren Unterbindungsanschlüsse der Vorrichtung; und
der Endstufe, wobei ein Anschluss der Endstufe mit dem Ausgangsanschluss der Vorrichtung verbunden ist.

Bevorzugte Ausführungsbeispiele der vorliegenden Erfindung werden nachfolgend Bezug nehmend auf die beiliegenden Zeichnungen näher erläutert. Es zeigen:
- Fig. 1: eine Darstellung einer Aktuatorschaltung für ein Fahrzeug gemäß einem Ausführungsbeispiel der vorliegenden Erfindung;
- Fig. 2: ein Schaltbild einer Vorrichtung zum Ansteuern einer Endstufe für einen Aktuator gemäß einem Ausführungsbeispiel der vorliegenden Erfindung;
- Fig. 3: ein Ablaufdiagramm eines Verfahrens zum Ansteuern einer Endstufe für einen Aktuator gemäß einem Ausführungsbeispiel der vorliegenden Erfindung; und
- Fig. 4: ein Schaltbild einer Vorrichtung zum Ansteuern einer Endstufe für einen Aktuator gemäß einem Ausführungsbeispiel der vorliegenden Erfindung.

In der nachfolgenden Beschreibung der bevorzugten Ausführungsbeispiele der vorliegenden Erfindung werden für die in den verschiedenen Zeichnungen dargestellten und ähnlich wirkenden Elemente gleiche oder ähnliche Bezugszeichen verwendet, wobei eine wiederholte Beschreibung dieser Elemente weggelassen wird.

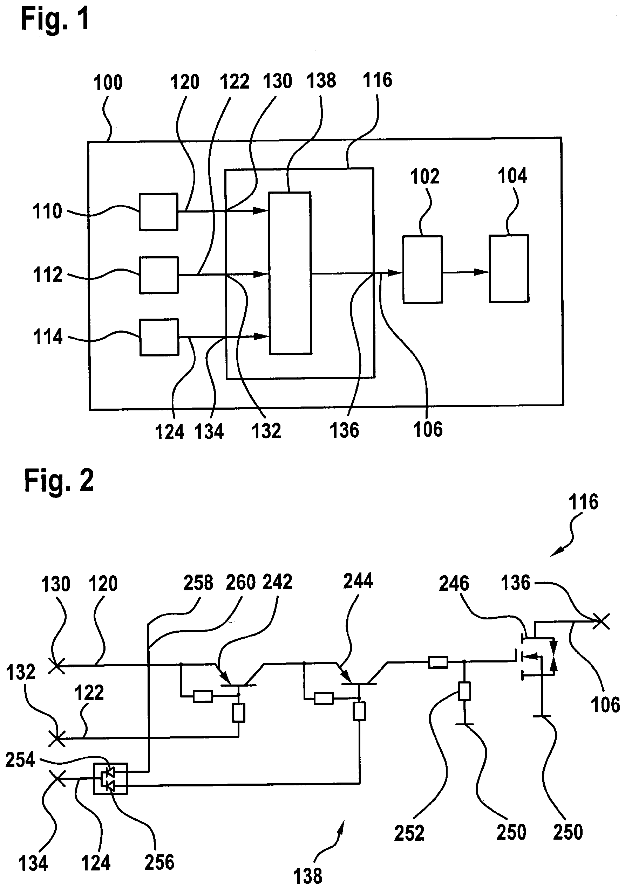

Fig. 1 zeigt eine Darstellung eines Fahrzeugs 100 mit einer Aktuatorschaltung gemäß einem Ausführungsbeispiel der vorliegenden Erfindung. Bei dem Fahrzeug 100 handelt es sich lediglich beispielhaft um einen Lastkraftwagen oder Personenkraftwagen.

Das Fahrzeug 100 weist eine Endstufe 102 auf, die verwendet wird, um einen Aktuator 104 anzusteuern. Der Aktuator 104 kann beispielsweise verwendet werden, um eine sicherheitsrelevante Einrichtung des Fahrzeugs 100, beispielsweise eine Bremse, zu betätigen. Gemäß diesem Ausführungsbeispiel ist der Aktuator 104 als ein Ventil realisiert, das in einem Zustand eine Durchleitung eines Fluids, beispielsweise von Luft für eine pneumatische Steuerung oder einer Hydraulikflüssigkeit für eine hydraulische Steuerung, ermöglicht und in einem anderen Zustand die Durchleitung des Fluids verhindert. Zum Umschalten zwischen den Zuständen wird an die Endstufe 102 ein Ansteuersignal 106 angelegt. Gemäß diesem Ausführungsbeispiel stellt das Ansteuersignal 106 einen elektrischen Strom dar, der ein Umschalten der Endstufe 102 in einen ersten der Zustände und ein Halten der Endstufe in dem ersten Zustand bewirkt. Alternativ kann das Ansteuersignal 106 eine elektrische Spannung darstellen. Wird das Ansteuersignal 106 nicht an die Endstufe bereitgestellt, so wechselt die Endstufe 102 gegebenenfalls von dem ersten Zustand in den zweiten der Zustände und verbleibt in dem zweiten Zustand, bis das Ansteuersignal erneut bereitgestellt wird.

Die Aktuatorschaltung umfasst neben der Endstufe 102 eine Applikationseinrichtung 110, eine Überwachungseinrichtung 112, eine Spannungsüberwachungseinrichtung 114 sowie eine Vorrichtung 116 zum Ansteuern der Endstufe 102. Die Applikationseinrichtung 110 wird im Folgenden auch als Applikationsrechner, die Überwachungseinrichtung 112 auch als Überwachungsrechner und die Spannungsüberwachungseinrichtung 114 auch als Spannungsüberwachungsschaltung bezeichnet.

Die Applikationseinrichtung 110 ist ausgebildet, um eine Applikation auszuführen, die eine Betätigung der Endstufe 102 umfasst. Die Applikation kann beispielsweise eine Steuerung eines Bremssystems des Fahrzeugs 100 umfassen. Die Applikationseinrichtung 110 kann als ein Steuergerät aufgefasst werden oder von einem Steuergerät umfasst sein. Die Applikationseinrichtung 110 ist ausgebildet, um ein Freigabesignal 120 zum Freigeben einer Ansteuerung der Endstufe 102 bereitzustellen. Je nachdem, ob die Ausführung der Applikation in der Applikationseinrichtung 110 ergibt, dass eine Ansteuerung der Endstufe 102 erfolgen soll oder nicht erfolgen soll, ist die Applikationseinrichtung 110 ausgebildet, um das Freigabesignal 120 auf einen Freigabezustand zum Freigeben der Ansteuerung der Endstufe 102 oder auf einen Sperrzustand zum Sperren der Ansteuerung der Endstufe 102 zu setzen. Der Freigabezustand und der Sperrzustand können sich dabei durch unterschiedliche Spannungspegel unterscheiden. Die Applikationseinrichtung 110 ist ausgebildet, um das Freigabesignal 120 über eine Schnittstelle an die Vorrichtung 116 auszugeben.

Die Überwachungseinrichtung 112 ist ausgebildet, um eine Überwachungsfunktion, beispielsweise zum Überwachen einer korrekten Funktion der Applikationseinrichtung 110 oder eines in Bezug auf eine korrekte Funktion der Aktuatorschaltung oder des Fahrzeugs 100 relevanten Elements auszuführen. Die Überwachungseinrichtung 112 kann als ein weiteres Steuergerät aufgefasst werden oder von einem Steuergerät umfasst sein. Die Überwachungseinrichtung 112 ist ausgebildet, um ein erstes Unterbindungssignal 122 zum Unterbinden der Ansteuerung der Endstufe 102 bereitzustellen. Je nachdem, ob die Ausführung der Überwachungsfunktion in der Überwachungseinrichtung 112 ergibt, dass die Ansteuerung der Endstufe 102 erfolgen kann oder unterbunden werden soll, ist die Überwachungseinrichtung 112 ausgebildet, um das erste Unterbindungssignal 122 auf einen ersten Zulassungszustand zum Zulassen der Ansteuerung der Endstufe 102 oder auf einen ersten Unterbindungszustand zum Unterbinden der Ansteuerung der Endstufe 102 zu setzen. Der Zulassungszustand und der Unterbindungszustand können sich dabei durch unterschiedliche Spannungspegel unterscheiden. Die Überwachungseinrichtung 112 ist ausgebildet, um das erste Unterbindungssignal 122 über eine Schnittstelle an die Vorrichtung 116 auszugeben.

Die Spannungsüberwachungseinrichtung 114 ist ausgebildet, um eine Überwachungsfunktion zum Überwachen einer elektrischen Spannung, beispielsweise einer in der Aktuatorschaltung verwendeten Betriebsspannung, auszuführen. Die Spannungsüberwachungseinrichtung 114 kann als eine elektrische Schaltung aufgefasst werden. Die Spannungsüberwachungseinrichtung 114 ist ausgebildet, um ein zweites Unterbindungssignal 124 zum Unterbinden der Ansteuerung der Endstufe 102 bereitzustellen. Je nachdem, ob die Ausführung der Überwachungsfunktion in der Spannungsüberwachungseinrichtung 114 ergibt, dass die Ansteuerung der Endstufe 102 erfolgen kann oder unterbunden werden soll, ist die Spannungsüberwachungseinrichtung 114 ausgebildet, um das zweite Unterbindungssignal 124 auf einen zweiten Zulassungszustand zum Zulassen der Ansteuerung der Endstufe 102 oder auf einen zweiten Unterbindungszustand zum Unterbinden der Ansteuerung der Endstufe 102 zu setzen. Der Zulassungszustand und der Unterbindungszustand können sich dabei durch unterschiedliche Spannungspegel unterscheiden und gemäß einem Ausführungsbeispiel den Zuständen des ersten Unterbindungssignals entsprechen. Die Spannungsüberwachungseinrichtung 114 ist ausgebildet, um das zweite Unterbindungssignal 124 über eine Schnittstelle an die Vorrichtung 116 auszugeben.

Die Vorrichtung 116 weist einen Freigabeanschluss 130, einen ersten Unterbindungsanschluss 132, einen zweiten Unterbindungsanschluss 134, einen Ausgangsanschluss 136 und eine Verknüpfungseinrichtung 138 auf. Die Vorrichtung 116 ist über den Freigabeanschluss 130 und eine elektrische Leitung mit der Applikationseinrichtung 110 verbunden und ausgebildet, um das Freigabesignal 120 von der Applikationseinrichtung 110 zu empfangen. Über den ersten Unterbindungsanschluss 132 und eine elektrische Leitung ist die Vorrichtung 116 mit der Überwachungseinrichtung 112 verbunden und ausgebildet, um von der Überwachungseinrichtung 112 das erste Unterbindungssignal 122 zu empfangen. Über den zweiten Unterbindungsanschluss 134 und eine elektrische Leitung ist die Vorrichtung 116 mit der Spannungsüberwachungseinrichtung 114 verbunden und ausgebildet, um von der Spannungsüberwachungseinrichtung 114 das zweite Unterbindungssignal 124 zu empfangen. Über den Ausgangsanschluss 136 und eine elektrische Leitung ist die Vorrichtung 116 mit der Endstufe 102 verbunden und ausgebildet, um das Ansteuersignal 106 abhängig von einer in der Verknüpfungseinrichtung 138 durchgeführten Verknüpfung an die Endstufe 102 bereitzustellen oder nicht bereitzustellen.

Die Verknüpfungseinrichtung 138 ist ausgebildet, um das Freigabesignal 120 sowie die Unterbindungssignale 122, 124 unter Verwendung einer Verknüpfungsvorschrift miteinander zu verknüpfen und das Ansteuersignal 106 abhängig von einem Ergebnis der Verknüpfung bereitzustellen. Die Verknüpfungsvorschrift kann durch eine elektrische Schaltung abgebildet sein, wie sie beispielsweise in Fig. 2 gezeigt ist.

Die Verknüpfungseinrichtung 138 ist ausgebildet, um das Ansteuersignal 106 bereitzustellen, wenn das Freigabesignal 120 den Freigabezustand, das erste Unterbindungssignal 122 den ersten Zulassungszustand und das zweite Unterbindungssignal 124 den zweiten Zulassungszustand aufweist.

Gemäß einem Ausführungsbeispiel ist die Verknüpfungseinrichtung 138 ausgebildet, um das Ansteuersignal 106 nicht bereitzustellen, wenn das Freigabesignal 120 nicht den Freigabezustand und zusätzlich oder alternativ das erste Unterbindungssignal 122 nicht den ersten Zulassungszustand und zusätzlich oder alternativ das zweite Unterbindungssignal 124 nicht den zweiten Zulassungszustand aufweist.

Fig. 2 zeigt ein Schaltbild einer Vorrichtung 116 zum Ansteuern einer Endstufe für einen Aktuator gemäß einem Ausführungsbeispiel der vorliegenden Erfindung. Die Vorrichtung 116 kann im Zusammenhang mit der in Fig. 1 beschriebenen Aktuatorschaltung eingesetzt werden.

Die Vorrichtung 116 weist einen Freigabeanschluss 130 zum Empfangen eines Freigabesignals 120 auf, das im Folgenden auch als Signal ACT_MV12_LS bezeichnet wird. Das Freigabesignal 120 kann als Freigabezustand einen Zustand log.1, der als logisch Eins bezeichnet werden kann, und als Sperrzustand einen Zustand log.0 annehmen, der als logisch Null bezeichnet werden kann.

Die Vorrichtung 116 weist einen ersten Unterbindungsanschluss 132 zum Empfangen eines ersten Unterbindungssignals 122 auf, das im Folgenden auch als Signal ACT_EN_MV12_LS_B bezeichnet wird. Das erste Unterbindungssignal 122 kann als Zulassungszustand einen Zustand log.0 und als Unterbindungszustand einen Zustand log. 1 annehmen.

Die Vorrichtung 116 weist einen zweiten Unterbindungsanschluss 134 zum Empfangen eines zweiten Unterbindungssignals 124 auf, das im Folgenden auch als Signal VCC_0V bezeichnet wird. Das zweite Unterbindungssignal 124 kann als Zulassungszustand einen Zustand log.0 und als Unterbindungszustand einen Zustand log. 1 annehmen.

Die Vorrichtung 116 weist einen Ausgangsanschluss 136 als eine Schnittstelle zu der Endstufe auf. Über den Ausgangsanschluss 136 ist die Vorrichtung 116 ausgebildet, um ein Ansteuersignal 106 zum Ansteuern der Endstufe auszugeben. Das Ansteuersignal106 wird im Folgenden auch als MV12_LS bezeichnet.

Die Verknüpfungseinrichtung 138 ist als eine Transistorschaltung realisiert. Somit sind Schalter zum Verbinden oder Unterbrechen von Leitungen zwischen den Eingangsanschlüssen 130, 132, 134 und dem Ausgangsanschluss 136 durch Transistoren 242, 244, 246 realisiert.

Die Verknüpfungseinrichtung 138 weist einen ersten Transistor 242, einen zweiten Transistor 244 und einen dritten Transistor 246 auf. Der Freigabeanschluss 130 ist mit einem Freigabeanschluss (Emitter) des ersten Transistors 142 verbunden. Ein zweiter Anschluss (Kollektor) des ersten Transistors 242 ist mit einem ersten Anschluss (Emitter) des zweiten Transistors 244 verbunden. Ein zweiter Anschluss (Kollektor) des zweiten Transistors 244 ist mit einem Steueranschluss (Gate) des dritten Transistors 246 verbunden. Ein erster Anschluss (Source) des dritten Transistors 246 ist mit einem Versorgungsspannungsanschluss, hier einem Masseanschluss 250 der Verknüpfungseinrichtung 138 verbunden. Ein zweiter Anschluss (Drain) des dritten Transistors 246 ist mit dem Ausgangsanschluss 136 verbunden. Ein Steueranschluss (Basis) des ersten Transistors 242 ist mit dem ersten Unterbindungsanschluss 132 verbunden. Ein Steueranschluss (Basis) des zweiten Transistors 244 ist mit dem zweiten Unterbindungsanschluss 134 verbunden.

Gemäß einem alternativen Ausführungsbeispiel umfasst die Endstufe den dritten Transistor 246. Beispielsweise kann der dritte Transistor 246 einen High-Side-Schalter darstellen.

Gemäß dem in Fig. 2 gezeigten Ausführungsbeispiel sind die Transistoren 242, 244 beispielhaft als Bipolartransistoren und der Transistor 246 als Feldeffekttransistor ausgeführt. Es können auch andere geeignete Transistoren mit entsprechenden Transistorverschaltungen verwendet werden.

Gemäß einem Ausführungsbeispiel ist der Steueranschluss des dritten Transistors 246 über einen Pull-down Widerstand 252, beispielsweise einem 10 kOhm Widerstand mit dem Masseanschluss 250 verbunden. Der zweite Anschluss des zweiten Transistors 244 ist über einen Widerstand, beispielsweise einem 100 Ohm Widerstand, mit dem Steueranschluss des dritten Transistors 246 verbunden.

Gemäß einem Ausführungsbeispiel ist der Steueranschluss des zweiten Transistors 244 über einen Widerstand mit dem ersten Anschluss des zweiten Transistors 244 und über einen Widerstand mit dem zweiten Unterbindungsanschluss 134 verbunden.

Gemäß einem Ausführungsbeispiel ist der Steueranschluss des ersten Transistors 242 über einen Widerstand mit dem ersten Anschluss des ersten Transistors 242 und über einen Widerstand mit dem ersten Unterbindungsanschluss 132 verbunden. Zwischen dem ersten Unterbindungsanschluss 132 und dem Steueranschluss des ersten Transistors 242 kann optional eine Diode geschaltet sein.

Gemäß einem Ausführungsbeispiel weist die Vorrichtung 116 einen optionalen Sicherheitsschaltungsanschluss 258 auf. In diesem Fall weist die Verknüpfungseinrichtung 138 eine erste Diode 254 und eine zweite Diode 256 auf. Der Sicherheitsschaltungsanschluss 258 der Vorrichtung 116 ist über die erste Diode 254 mit dem zweiten Unterbindungsanschluss 134 der Vorrichtung 116 und der zweite Unterbindungsanschluss 134 der Vorrichtung 116 ist über die zweite Diode 256 mit dem Steueranschluss des zweiten Transistors 244 verbunden. Dazu ist der zweite Unterbindungsanschluss 134 mit den Kathodenanschlüssen der Dioden 254, 256 verbunden. Über den Sicherheitsschaltungsanschluss 258 kann ein Signal 260 bereitgestellt werden, über das die Bereitstellung des Ansteuersignals 106 verhindert werden kann. Ein Verhinderungszustand des Signals 260 kann durch log. 1 gekennzeichnet sein. Das Signal 260 führt gemäß diesem Ausführungsbeispiel zu einer Schaltung, die die Endstufe zum positiven Anschluss des Aktuators einschaltet.

Die in Fig. 2 gezeigte Schaltung ist lediglich beispielhaft gewählt. Insbesondere kann die Anzahl der Anschlüsse und somit die Reihenschaltung der Transistoren 242, 244 beliebig erweitert werden, um zusätzliche Freigabesignale verarbeiten zu können. Beispielsweise können anstelle der gezeigten zwei Transistoren 242, 244 eine Reihenschaltung aus drei, vier oder mehr Transistoren verwendet werden. Dies ermöglicht es, zusätzlich zu den Signalen 122, 124 weitere Signale zu verarbeiten.

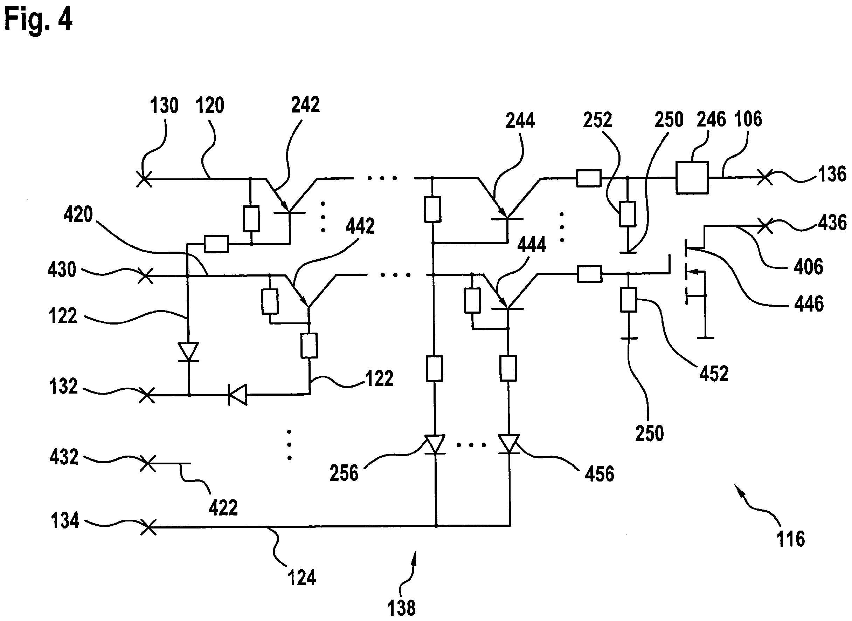

Ebenso, wie es nachfolgend anhand von Fig. 4 angedeutet ist, können die Freigabeanschlüsse auf beliebig viele Aktuatoren wirken, wie es in Fig. 4 durch eine Parallelschaltung der Transistoren 242, 442 bzw. 244, 444 gezeigt ist.

Bezug nehmend auf Fig. 2 kann zur Ansteuerung einer Mehrzahl von Aktuatoren beispielsweise eine der Mehrzahl von Aktuatoren entsprechende Anzahl von Reihenschaltungen aus Transistoren 242, 244 vorgesehen sein, wobei die Anzahl der in einer Reihenschaltung angeordneten Transistoren 242, 244 wiederum beliebig erweiterbar ist.

Gemäß einem alternativen Ausführungsbeispiel entfällt der Transistor 242, so dass die Schaltung lediglich den Transistor 244 mit den eingangseitigen Anschlüsse 130, 134 und optional 258 sowie dem ausgangsseitigen Anschluss 136 aufweist.

Im Folgenden wird ein Ausführungsbeispiel der vorliegenden Erfindung anhand von Fig. 2 detailliert in Form eines Schaltungsauszugs beschrieben.

Der Applikationsrechner, wie er beispielhaft in Fig. 1 gezeigt ist, aktiviert einen Anschluss, hier beispielhaft den negativen Anschluss des Aktors, wie er beispielhaft in Fig. 1 gezeigt ist, und gemäß diesem Ausführungsbeispiel zumindest zwei Magnetventile (MV12_LS) umfasst, über das Signal 106 ACT _MV12_LS=log.1 und den dritten Transistor 246 (T7009).

Der Überwachungsrechner, wie er beispielhaft in Fig. 1 gezeigt ist, kann diese Aktivierung unterbinden, indem er das Signal 132 ACT _EN_MV12_LS_B auf log.1 setzt.

Eine Vcc-Spannungsüberwachungsschaltung, wie sie beispielhaft in Fig. 1 gezeigt ist, kann diese Aktivierung ebenfalls unterbinden, indem sie das Signal 134 VCC_0V auf log.1 setzt.

Nur bei einer von acht möglichen Kombinationen, nämlich Signal 130 ACT_MV12_LS=log.1, Signal 132 ACT_EN_MV12_LS_B auf log.0 und Signal 134 VCC_0V =log.0, wird der negative Anschluss der Magnetventile (MV12_LS) aktiviert, indem das Signal 106 an einen Anschluss des Aktors bereitgestellt wird.

Ist das Signal 132 zum Überwachungsrechner oder das Signal 134 zur Vcc-Spannungsüberwachungsschaltung unterbrochen oder der Port des Rechners und somit das Signal 130 hochohmig (inaktiv), ist MV12_LS ebenfalls deaktiviert.

Dadurch, dass die Ansteuersignale 130, 132, 134 zur Aktivierung von MV12_LS gegensinnig sind, führt auch ein Gleichtakt-Fehler (beide Signale log1 oder beide logO) nicht zur Aktivierung.

Jede Unterbrechung eines Bauteils 242, 244, 246, 254, 256 (Dioden 245, 256 (D7005), zweiter Transistor 244 (T7005), erster Transistor 242 (T7006) und Widerstand (R7004) zwischen den Transistoren 244, 246) aus der Verknüpfungsschaltung 138 führt zur Deaktivierung von MV12_LS und damit zum sicheren Zustand, indem das Signal 106 nicht oder mit einem nicht zur Aktivierung des Aktors geeigneten Zustand bereitgestellt wird.

Vorteilhafterweise sind die Elemente der Verknüpfungsschaltung 138 für die Überwachungsschaltungen so angeordnet, dass jeder Einzelfehler zur Deaktivierung des geschalteten Aktuatoranschlusses über den Ausgangsanschluss 106 und damit zum sicheren Zustand des Systems führt.

Die gewählte Anordnung benötigt dabei keine zusätzlichen Bauteile im Vergleich zu alternativen Ausführungsformen und führt damit nicht zu höheren Kosten oder höherem Platzbedarf.

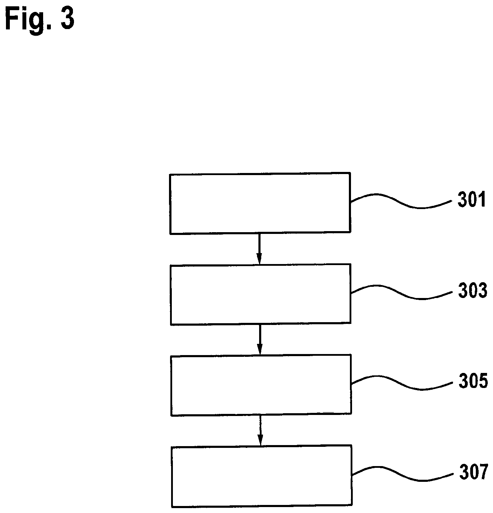

Fig. 3 zeigt ein Ablaufdiagramm eines Verfahrens zum Ansteuern einer Endstufe gemäß einem Ausführungsbeispiel der vorliegenden Erfindung. Die Schritte des Verfahrens können im Zusammenhang mit den anhand von Fig. 2 beschriebenen Einrichtungen umgesetzt werden.

In einem Schritt 301 wird ein Freigabesignal über eine Schnittstelle zu einer Applikationseinrichtung empfangen, wie sie beispielsweise in Fig. 1 gezeigt ist. Das Freigabesignal kann einen Freigabezustand zum Freigeben einer Ansteuerung der Endstufe und einen Sperrzustand zum Sperren der Ansteuerung der Endstufe annehmen. In einem Schritt 303 wird ein erstes Unterbindungssignal über eine Schnittstelle zu einer Überwachungseinrichtung empfangen, wie sie beispielsweise in Fig. 1 gezeigt ist. Das erste Unterbindungssignal kann einen ersten Zulassungszustand zum Zulassen der Ansteuerung der Endstufe und einen ersten Unterbindungszustand zum Unterbinden der Ansteuerung der Endstufe annehmen kann. In einem Schritt 305 wird ein zweites Unterbindungssignal über eine Schnittstelle zu einer Spannungsüberwachungseinrichtung empfangen, wie sie beispielsweise in Fig. 1 gezeigt ist. Das zweite Unterbindungssignal kann einen zweiten Zulassungszustand zum Zulassen der Ansteuerung der Endstufe und einen zweiten Unterbindungszustand zum Unterbinden der Ansteuerung der Endstufe annehmen kann.

Die Schritte 301, 303, 305 können wiederholt in unterschiedlicher Reihenfolge, insbesondere auch kontinuierlich und gleichzeitig ausgeführt werden.

In einem Schritt 307 wird ein Ansteuersignal zum Ansteuern der Endstufe an einen als Schnittstelle zu der Endstufe dienenden Ausgangsanschluss bereitgestellt. Das Ansteuersignal wird bereitgestellt, wenn das Freigabesignal den Freigabezustand, das erste Unterbindungssignal den ersten Zulassungszustand und das zweite Unterbindungssignal den zweiten Zulassungszustand aufweist.

Fig. 4 zeigt ein Schaltbild einer Vorrichtung 116 zum Ansteuern mehrerer Endstufen gemäß einem Ausführungsbeispiel der vorliegenden Erfindung. Die Vorrichtung 116 stellt eine Erweiterung der anhand von Fig. 2 beschriebenen Vorrichtung dar. Die bereits anhand von Fig. 2 beschriebenen Elemente der Vorrichtung 116 werden im Folgenden nicht erneut beschrieben.

Die Vorrichtung 116 weist zumindest einen weiteren Freigabeanschluss 430 zum Empfangen eines weiteren Freigabesignals 420 auf. Das weitere Freigabesignal 420 kann als Freigabezustand einen Zustand log.1, der als logisch Eins bezeichnet werden kann, und als Sperrzustand einen Zustand log.0 annehmen, der als logisch Null bezeichnet werden kann.

Neben den Unterbindungsanschlüssen 132, 134 weist die Vorrichtung 116 optional einen oder mehrere zusätzliche Unterbindungsanschlüsse auf, wie es durch den zumindest einen weiteren Unterbindungsanschluss 432 zum Empfangen eines weiteren Unterbindungssignals 422 angedeutet ist. Das weitere Unterbindungssignal 422 kann als Zulassungszustand einen Zustand log.0 und als Unterbindungszustand einen Zustand log. 1 annehmen.

Die Vorrichtung 116 weist zumindest einen weiteren Ausgangsanschluss 436 als eine Schnittstelle zu einer weiteren Endstufe auf. Über den weiteren Ausgangsanschluss 436 ist die Vorrichtung 116 ausgebildet, um ein weiteres Ansteuersignal 406 zum Ansteuern der weiteren Endstufe auszugeben.

Die Verknüpfungseinrichtung 138 ist als eine Transistorschaltung realisiert. Somit sind Schalter zum Verbinden oder Unterbrechen von Leitungen zwischen den Eingangsanschlüssen 130, 132, 134 und dem Ausgangsanschluss 136 durch Transistoren 242, 244, 246 realisiert.

Die Verknüpfungseinrichtung 138 weist einen weiteren ersten Transistor 442, einen weiteren zweiten Transistor 444 und einen weiteren dritten Transistor 446 auf. Der Freigabeanschluss 130 ist mit einem Freigabeanschluss des weiteren ersten Transistors 442 verbunden. Ein zweiter Anschluss des weiteren ersten Transistors 442 ist mit einem ersten Anschluss des weiteren zweiten Transistors 444 verbunden. Ein zweiter Anschluss des weiteren zweiten Transistors 444 ist mit einem Steueranschluss des weiteren dritten Transistors 446 verbunden. Ein erster Anschluss des weiteren dritten Transistors 446 ist mit einem Versorgungsspannungsanschluss, hier dem Masseanschluss 250 der Verknüpfungseinrichtung 138 verbunden. Ein zweiter Anschluss des weiteren dritten Transistors 446 ist mit dem weiteren Ausgangsanschluss 436 verbunden. Ein Steueranschluss des ersten Transistors 442 ist mit dem ersten Unterbindungsanschluss 132 verbunden. Ein Steueranschluss des zweiten Transistors 444 ist mit dem zweiten Unterbindungsanschluss 134 verbunden.

Gemäß einem alternativen Ausführungsbeispiel umfasst die weitere Endstufe den weiteren dritten Transistor 446.

Gemäß dem in Fig. 4 gezeigten Ausführungsbeispiel sind die Transistoren 442, 444 beispielhaft als Bipolartransistoren und der Transistor 446 als Feldeffekttransistor ausgeführt. Es können auch andere geeignete Transistoren mit entsprechenden Transistorverschaltungen verwendet werden.

Gemäß einem Ausführungsbeispiel ist der Steueranschluss des weiteren dritten Transistors 446 über einen Pull-down Widerstand 452 mit dem Masseanschluss 250 verbunden. Der zweite Anschluss des weiteren zweiten Transistors 244 ist über einen Widerstand mit dem Steueranschluss des weiteren dritten Transistors 446 verbunden.

Gemäß einem Ausführungsbeispiel ist der Steueranschluss des weiteren zweiten Transistors 444 über einen Widerstand mit dem ersten Anschluss des weiteren zweiten Transistors 444 und über einen Widerstand sowie eine Diode 456 mit dem zweiten Unterbindungsanschluss 134 verbunden.

Gemäß einem Ausführungsbeispiel ist der Steueranschluss des weiteren ersten Transistors 442 über einen Widerstand mit dem ersten Anschluss des weiteren ersten Transistors 442 und über einen Widerstand sowie einer Diode 460 mit dem ersten Unterbindungsanschluss 132 verbunden. Entsprechend ist der Steueranschluss des ersten Transistors 242 gemäß diesem Ausführungsbeispiel über einen Widerstand sowie einer Diode 462 mit dem ersten Unterbindungsanschluss 132 verbunden.

Die Vorrichtung 116 kann neben den gezeigten Unterbindungsanschlüssen 132, 134, 432, die zum Empfangen von Freigaben eingesetzt werden können, einen oder mehrere weitere Unterbindungsanschlüsse aufweisen. Pro weiteren Unterbindungsanschluss weist die Vorrichtung 116 pro Transistorzweig einen einen weiteren Transistor auf, der entsprechend den gezeigten Transistoren 242, 244, 442, 444 verschaltet ist.

Die Vorrichtung 116 kann neben den gezeigten Freigabeanschlüssen 130, 430, die auch als Ansteueranschlüsse bezeichnet werden können, einen oder mehrere weitere Freigabeanschlüsse aufweisen. Pro weiteren Freigabeanschluss weist die Vorrichtung 116 einen weiteren Transistorzweig auf, der pro Unterbindungsanschluss 132, 134, 432 der Vorrichtung 116 einen Transistor zuzüglich eines ausgangsseitigen Transistors aufweist.

### Bezugszeichenliste

- 100: Fahrzeug
- 102: Endstufe
- 104: Aktuator
- 106: Ansteuersignal
- 110: Applikationseinrichtung
- 112: Überwachungseinrichtung
- 114: Spannungsüberwachungseinrichtung
- 116: Vorrichtung
- 120: Freigabesignal
- 122: erstes Unterbindungssignal
- 124: zweites Unterbindungssignal
- 130: Freigabeanschluss
- 132: erster Unterbindungsanschluss
- 134: zweiter Unterbindungsanschluss
- 136: Ausgangsanschluss
- 138: Verknüpfungseinrichtung
- 242: erster Transistor
- 244: zweiter Transistor
- 246: dritter Transistor
- 250: Masseanschluss
- 252: Widerstand
- 254: erste Diode
- 256: zweite Diode
- 258: Sicherheitsschaltungsanschluss
- 260: Signal
- 301: Schritt des Empfangens
- 303: Schritt des Empfangens
- 305: Schritt des Empfangens
- 307: Schritt des Bereitstellens
- 420: weiteres Freigabesignal
- 430: weiterer Freigabeanschluss
- 436: weiterer Ausgangsanschluss
- 442: weiterer erster Transistor
- 444: weiterer zweiter Transistor
- 446: weiterer dritter Transistor
- 452: weiterer Widerstand
- 456: Diode
- 460: Diode
- 462: Diode

## Patentansprüche

1. Vorrichtung (116) zum Ansteuern einer Endstufe für einen Aktuator (104), insbesondere eines Magnetventils, für ein Fahrzeug (100), mit folgenden Merkmalen:
einem Freigabeanschluss (130) zum Empfangen eines Freigabesignals (120) über eine Schnittstelle zu einer Applikationseinrichtung (110), wobei das Freigabesignal (120) einen Freigabezustand zum Freigeben einer Ansteuerung der Endstufe (102) und einen Sperrzustand zum Sperren der Ansteuerung der Endstufe (102) annehmen kann;
einem ersten Unterbindungsanschluss (132) zum Empfangen eines ersten Unterbindungssignals (122) über eine Schnittstelle zu einer Überwachungseinrichtung (112), wobei das erste Unterbindungssignal (122) einen ersten Zulassungszustand zum Zulassen der Ansteuerung der Endstufe (102) und einen ersten Unterbindungszustand zum Unterbinden der Ansteuerung der Endstufe (102) annehmen kann;
einem zweiten Unterbindungsanschluss (134) zum Empfangen eines zweiten Unterbindungssignals (124) über eine Schnittstelle zu einer zweiten Überwachungseinrichtung (114), wobei das zweite Unterbindungssignal (124) einen zweiten Zulassungszustand zum Zulassen der Ansteuerung der Endstufe (102) und einen zweiten Unterbindungszustand zum Unterbinden der Ansteuerung der Endstufe (102) annehmen kann;
einem Ausgangsanschluss (136) als eine Schnittstelle zu der Endstufe (102); und
einer Verknüpfungseinrichtung (138), die ausgebildet ist, um ein Ansteuersignal (106) zum Ansteuern der Endstufe (102) an den Ausgangsanschluss (106) bereitzustellen, wenn das Freigabesignal (120) den Freigabezustand, das erste Unterbindungssignal (122) den ersten Zulassungszustand und das zweite Unterbindungssignal (124) den zweiten Zulassungszustand aufweist.

2. Vorrichtung (116) gemäß Anspruch 1, bei der die Verknüpfungseinrichtung (138) ausgebildet ist, um das Ansteuersignal (106) nicht bereitzustellen, wenn das Freigabesignal (120) den Sperrzustand und/oder das erste Unterbindungssignal (122) den ersten Unterbindungszustand und/oder das zweite Unterbindungssignal (124) den zweiten Unterbindungszustand aufweist.

3. Vorrichtung (116) gemäß einem der vorangegangenen Ansprüche, bei dem der Freigabezustand des Freigabesignals (120) einen ersten logischen Zustand, der Sperrzustand des Freigabesignals (120) einen zweiten logischen Zustand, die Zulassungszustände der Unterbindungssignale (122, 124) den zweiten logischen Zustand und die Unterbindungszustände der Unterbindungssignale (122, 124) den ersten logischen Zustand repräsentieren.

4. Vorrichtung (116) gemäß einem der vorangegangenen Ansprüche, bei der die Verknüpfungseinrichtung (138) einen ersten Schalter (242), einen zweiten Schalter (244) und einen dritten Schalter (246) aufweist, wobei der erste Schalter (242) und der zweite Schalter (244) in Reihe zwischen dem Freigabeanschluss (130) und einem Steueranschluss des dritten Schalters (246) geschaltet sind, der dritte Schalter (246) zwischen einem Versorgungsspannungsanschluss (250) zum Bereitstellen einer Versorgungsspannung zum Betreiben der Endstufe (102) und dem Ausgangsanschluss (136) geschaltet ist, ein Steueranschluss des ersten Schalters (242) mit dem ersten Unterbindungsanschluss (132) verbunden ist und ein Steueranschluss des zweiten Schalters (244) mit dem zweiten Unterbindungsanschluss (134) verbunden ist.

5. Vorrichtung (116) gemäß Anspruch 4, bei der der erste Schalter (242) und der zweite Schalter (244) als Bipolartransistoren und der dritte Schalter (246) als ein Feldeffekttransistor oder als ein Bipolartransistor ausgeführt ist.

6. Vorrichtung (116) gemäß einem der Ansprüche 4 bis 5, bei der die Verknüpfungseinrichtung (138) einen Widerstand (252) aufweist, der zwischen den Steueranschluss des dritten Schalters (246) und dem Versorgungsspannungsanschluss (250) geschaltet ist.

7. Vorrichtung (116) gemäß einem der Ansprüche 4 bis 6, bei der die Verknüpfungseinrichtung (138) eine erste Diode (254) und eine zweite Diode (256) aufweist, wobei ein Sicherheitsschaltungsanschluss (258) der Vorrichtung (116) über die erste Diode (254) mit dem zweiten Unterbindungsanschluss (134) und der zweite Unterbindungsanschluss (134) über die zweite Diode (256) mit dem Steueranschluss des zweiten Schalters (244) verbunden sind.

8. Vorrichtung (116) gemäß einem der vorangegangenen Ansprüche, mit einem Sicherheitsschaltungsanschluss (258) zum Empfangen eines Signals (260), das einen Blockierungszustand zum Blockieren der Ansteuerung der Endstufe (102) annehmen kann, wobei die Verknüpfungseinrichtung (138) ausgebildet ist, um das Ansteuersignal (106) nicht bereitzustellen, wenn das Signal (260) den Blockierungszustand aufweist.

9. Vorrichtung (116) gemäß einem der vorangegangenen Ansprüche, mit zumindest einem weiteren Freigabeanschluss (430) zum Empfangen eines weiteren Freigabesignals (420) über eine weitere Schnittstelle zu der Applikationseinrichtung (110) oder zu einer weiteren Applikationseinrichtung, wobei das weitere Freigabesignal (420) einen Freigabezustand zum Freigeben einer Ansteuerung einer weiteren Endstufe und einen Sperrzustand zum Sperren der Ansteuerung der weiteren Endstufe annehmen kann, mit einem weiteren Ausgangsanschluss (436) als eine Schnittstelle zu der weiteren Endstufe, und wobei die Verknüpfungseinrichtung (138) ausgebildet ist, um ein weiteres Ansteuersignal (406) zum Ansteuern der weiteren Endstufe an den weiteren Ausgangsanschluss (436) bereitzustellen, wenn das weitere Freigabesignal (420) den Freigabezustand, das erste Unterbindungssignal (122) den ersten Zulassungszustand und das zweite Unterbindungssignal (124) den zweiten Zulassungszustand aufweist.

10. Vorrichtung (116) gemäß Anspruch 9, bei der die Verknüpfungseinrichtung (138) einen weiteren ersten Schalter (442), einen weiteren zweiten Schalter (444) und einen weiteren dritten Schalter (446) aufweist, wobei der weitere erste Schalter (442) und der zweite Schalter (444) in Reihe zwischen dem weiteren Freigabeanschluss (430) und einem Steueranschluss des weiteren dritten Schalters (446) geschaltet sind, der weitere dritte Schalter (446) zwischen dem Versorgungsspannungsanschluss (250) zum Bereitstellen einer Versorgungsspannung zum Betreiben der weiteren Endstufe und dem weiteren Ausgangsanschluss (436) geschaltet ist, ein Steueranschluss des weiteren ersten Schalters (442) mit dem ersten Unterbindungsanschluss (132) verbunden ist und ein Steueranschluss des weiteren zweiten Schalters (244) mit dem zweiten Unterbindungsanschluss (134) verbunden ist.

11. Vorrichtung (116) gemäß einem der vorangegangenen Ansprüche, mit zumindest einem weiteren Unterbindungsanschluss (432) zum Empfangen eines weiteren Unterbindungssignals (422) über eine Schnittstelle zu einer weiteren Überwachungseinrichtung, wobei das weitere Unterbindungssignal (422) einen weiteren Zulassungszustand zum Zulassen der Ansteuerung der Endstufe (102) und einen weiteren Unterbindungszustand zum Unterbinden der Ansteuerung der Endstufe (102) annehmen kann, und wobei die Verknüpfungseinrichtung (138) ausgebildet ist, um das Ansteuersignal (106) zum Ansteuern der Endstufe (102) an den Ausgangsanschluss (106) bereitzustellen, wenn ferner das weitere Unterbindungssignal (422) den weiteren Zulassungszustand aufweist.

12. Vorrichtung (116) zum Ansteuern einer Endstufe für einen Aktuator (104), insbesondere eines Magnetventils, für ein Fahrzeug (100), mit folgenden Merkmalen:
einem Freigabeanschluss (130) zum Empfangen eines Freigabesignals (120) über eine Schnittstelle zu einer Applikationseinrichtung (110), wobei das Freigabesignal (120) einen Freigabezustand zum Freigeben einer Ansteuerung der Endstufe (102) und einen Sperrzustand zum Sperren der Ansteuerung der Endstufe (102) annehmen kann;
einem Unterbindungsanschluss (132) zum Empfangen eines Unterbindungssignals (122) über eine Schnittstelle zu einer Überwachungseinrichtung (112), wobei das Unterbindungssignal (122) einen Zulassungszustand zum Zulassen der Ansteuerung der Endstufe (102) und einen Unterbindungszustand zum Unterbinden der Ansteuerung der Endstufe (102) annehmen kann;
einem Ausgangsanschluss (136) als eine Schnittstelle zu der Endstufe (102); und
einer Verknüpfungseinrichtung (138), die ausgebildet ist, um ein Ansteuersignal (106) zum Ansteuern der Endstufe (102) an den Ausgangsanschluss (106) bereitzustellen, wenn das Freigabesignal (120) den Freigabezustand und das Unterbindungssignal (122) den Zulassungszustand aufweist.

13. Verfahren zum Ansteuern einer Endstufe für einen Aktuator (102), insbesondere eines Magnetventils, für ein Fahrzeug (100), wobei das Verfahren die folgenden Schritte umfasst:
Empfangen (301) eines Freigabesignals (120) über eine Schnittstelle zu einer Applikationseinrichtung (110), wobei das Freigabesignal (120) einen Freigabezustand zum Freigeben einer Ansteuerung der Endstufe (102) und einen Sperrzustand zum Sperren der Ansteuerung der Endstufe (102) annehmen kann;
Empfangen (303) eines ersten Unterbindungssignals (122) über eine Schnittstelle zu einer Überwachungseinrichtung (112), wobei das erste Unterbindungssignal (122) einen ersten Zulassungszustand zum Zulassen der Ansteuerung der Endstufe (102) und einen ersten Unterbindungszustand zum Unterbinden der Ansteuerung der Endstufe (102) annehmen kann;
Empfangen (305) eines zweiten Unterbindungssignals (124) über eine Schnittstelle zu einer Spannungsüberwachungseinrichtung (114), wobei das zweite Unterbindungssignal (124) einen zweiten Zulassungszustand zum Zulassen der Ansteuerung der Endstufe (102) und einen zweiten Unterbindungszustand zum Unterbinden der Ansteuerung der Endstufe (102) annehmen kann; und
Bereitstellen (307) eines Ansteuersignals (106) zum Ansteuern der Endstufe (102) an einem als Schnittstelle zu der Endstufe (102) dienenden Ausgangsanschluss, wenn das Freigabesignal (120) den Freigabezustand, das erste Unterbindungssignal (122) den ersten Zulassungszustand und das zweite Unterbindungssignal (124) den zweiten Zulassungszustand aufweist.

14. Aktuatorschaltung für ein Fahrzeug (100), mit folgenden Merkmalen:
einer Vorrichtung (116) gemäß einem der vorangegangenen Ansprüche zum Ansteuern der Endstufe (102);
einer Applikationseinrichtung (110) zum Bereitstellen des Freigabesignals (120) an den Freigabeanschluss (130) der Vorrichtung (116);
einer Überwachungseinrichtung (112) zum Bereitstellen des ersten Unterbindungssignals (122) an den ersten Unterbindungsanschluss (132) der Vorrichtung (116);
einer Spannungsüberwachungseinrichtung (114) zum Bereitstellen des zweiten Unterbindungssignals (124) an den zweiten Unterbindungsanschluss (134) der Vorrichtung (116); und
der Endstufe (102), wobei ein Anschluss der Endstufe (102) mit dem Ausgangsanschluss (136) der Vorrichtung (116) verbunden ist.

## Claims

1. Device (116) for controlling an output stage for an actuator (104), in particular a solenoid valve, for a vehicle (100), comprising the following features:
an enable terminal (130) for receiving an enable signal (120) via an interface to an application unit (110), wherein the enable signal (120) can assume an enable state for enabling a control of the output stage (102) and a disable state for disabling the control of the output stage (102); 1
a first suppression terminal (132) for receiving a first suppression signal (122) via an interface to a monitoring unit (112), wherein the first suppression signal (122) can assume a first authorization state for authorizing the control of the output stage (102) and a first suppression state for suppressing the control of the output stage (102);
a second suppression terminal (134) for receiving a second suppression signal (124) via an interface to a second monitoring unit (114), wherein the second suppression signal (124) can assume a second authorization state for authorizing the control of the output stage (102) and a second suppression state for suppressing the control of the output stage (102);
an output terminal (136) as an interface to the output stage (102); and
a linking unit (138) configured to provide a control signal (106) for controlling the output stage (102) to the output terminal (106) if the enable signal (120) has the enable state, the first suppression signal (122) has the first authorization state and the second suppression signal (124) has the second authorization state.

2. Device (116) according to Claim 1, wherein the linking unit (138) is configured not to provide the control signal (106) if the enable signal (120) has the disable state and/or the first suppression signal (122) has the first suppression state and/or the second suppression signal (124) has the second suppression state.

3. Device (116) according to either of the preceding claims, wherein the enable state of the enable signal (120) represents a first logic state, the disable state of the enable signal (120) represents a second logic state, the authorization states of the suppression signals (122, 124) represent the second logic state and the suppression states of the suppression signals (122, 124) represent the first logic state.

4. Device (116) according toany of the preceding claims, wherein the linking unit (138) comprises a first switch (242), a second switch (244) and a third switch (246), wherein the first switch (242) and the second switch (244) are connected in series between the enable terminal (130) and a control terminal of the third switch (246), the third switch (246) is connected between a supply voltage terminal (250) for providing a supply voltage for operating the output stage, (102) and the output terminal (136), a control terminal of the first switch (242) is connected to the first suppression terminal (132), and a control terminal of the second switch (244) is connected to the second suppression terminal (134).

5. Device (116) according to Claim 4, wherein the first switch (242) and the second switch (244) are embodied as bipolar transistors and the third switch (246) is embodied as a field effect transistor or as a bipolar transistor.

6. Device (116) according to either of Claims 4 and 5, wherein the linking unit (138) comprises a resistor (252) connected between the control terminal of the third switch (246) and the supply voltage terminal (250).

7. Device (116) according to any of Claims 4 to 6, wherein the linking unit (138) comprises a first diode (254) and a second diode (256), wherein a safety circuit terminal (258) of the device (116) is connected to the second suppression terminal (134) via the first diode (254) and the second suppression terminal (134) is connected to the control terminal of the second switch (244) via the second diode (256).

8. Device (116) according to any of the preceding claims, comprising a safety circuit terminal (258) for receiving a signal (260) which can assume a blocking state for blocking the control of the output stage (102), wherein the linking unit (138) is configured not to provide the control signal (106) if the signal (260) has the blocking state.

9. Device (116) according to any of the preceding claims, comprising at least one further enable terminal (430) for receiving a further enable signal (420) via a further interface to the application unit (110) or to a further application unit, wherein the further enable signal (420) can assume an enable state for enabling a control of a further output stage and a disable state for disabling the control of the further output stage, comprising a further output terminal (436) as an interface to the further output stage, and wherein the linking unit (138) is configured to provide a further control signal (406) for controlling the further output stage to the further output terminal (436) if the further enable signal (420) has the enable state, the first suppression signal (122) has the first authorization state and the second suppression signal (124) has the second authorization state.

10. Device (116) according to Claim 9, wherein the linking unit (138) comprises a further first switch (442), a further second switch (444) and a further third switch (446), wherein the further first switch (442) and the second switch (444) are connected in series between the further enable terminal (430) and a control terminal of the further third switch (446), the further third switch (446) is connected between the supply voltage terminal (250) for providing a supply voltage for operating the further output stage and the further output terminal (436), a control terminal of the further first switch (442) is connected to the first suppression terminal (132) and a control terminal of the further second switch (244) is connected to the second suppression terminal (134).

11. Device (116) according to any of the preceding claims, comprising at least one further suppression terminal (432) for receiving a further suppression signal (422) via an interface to a further monitoring unit, wherein the further suppression signal (422) can assume a further authorization state for authorizing the control of the output stage (102) and a further suppression state for suppressing the control of the output stage (102), and wherein the linking unit (138) is configured to provide the control signal (106) for controlling the output stage (102) to the output terminal (106) if the further suppression signal (422) furthermore has the further authorization state.

12. Device (116) for controlling an output stage for an actuator (104), in particular a solenoid valve, for a vehicle (100), comprising the following features:
an enable terminal (130) for receiving an enable signal (120) via an interface to an application unit (110), wherein the enable signal (120) can assume an enable state for enabling a control of the output stage (102) and a disable state for disabling the control of the output stage (102);
a suppression terminal (132) for receiving a suppression signal (122) via an interface to a monitoring unit (112), wherein the suppression signal (122) can assume an authorization state for authorizing the control of the output stage (102) and a suppression state for suppressing the control of the output stage (102);
an output terminal (136) as an interface to the output stage (102); and
a linking unit (138) configured to provide a control signal (106) for controlling the output stage (102) to the output terminal (106) if the enable signal (120) has the enable state, and the suppression signal (122) has the authorization state.

13. Method for controlling an output stage for an actuator (102), in particular a solenoid valve, for a vehicle (100), wherein the method comprises the following steps:
receiving (301) an enable signal (120) via an interface to an application unit (110), wherein the enable signal (120) can assume an enable state for enabling a control of the output stage (102) and a disable state for disabling the control of the output stage (102);
receiving (303) a first suppression signal (122) via an interface to a monitoring unit (112), wherein the first suppression signal (122) can assume a first authorization state for authorizing the control of the output stage (102) and a first suppression state for suppressing the control of the output stage (102);
receiving (305) a second suppression signal (124) via an interface to a voltage monitoring unit (114), wherein the second suppression signal (124) can assume a second authorization state for authorizing the control of the output stage (102) and a second suppression state for suppressing the control of the output stage (102); and providing (307) a control signal (106) for controlling the output stage (102) at an output terminal serving as an interface to the output stage (102) if the enable signal (120) has the enable state, the first suppression signal (122) has the first authorization state and the second suppression signal (124) has the second authorization state.

14. Actuator circuit for a vehicle (100), comprising the following features:
a device (116) as claimed in one of the preceding claims for controlling the output stage (102);
an application unit (110) for providing the enable signal (120) to the enable terminal (130) of the device (116);
a monitoring unit (112) for providing the first suppression signal (122) to the first suppression terminal (132) of the device (116);
a voltage monitoring unit (114) for providing the second suppression signal (124) to the second suppression terminal (134) of the device (116); and
the output stage (102), wherein a terminal of the output stage (102) is connected to the output terminal (136) of the device (116).

## Revendications

1. Système (116) de commande d'un étage final d'un actionneur (104), notamment d'une électrovanne, d'un véhicule (100), ayant les caractéristiques suivantes :
une borne (130) de validation, pour recevoir un signal (120) de validation par une interface avec un dispositif (110) d'application, le signal (120) de validation pouvant prendre un état de validation, pour valider une commande de l'étage (102) final et un état de blocage, pour bloquer la commande de l'étage (102) final ;
une première borne (132) de suppression, pour recevoir un premier signal (122) de suppression par une interface avec un dispositif (112) de contrôle, le premier signal (122) de suppression pouvant prendre un premier état d'autorisation, pour autoriser la commande de l'étage (102) final et un premier état de suppression, pour supprimer la commande de l'étage (102) final ;
une deuxième borne (134) de suppression, pour recevoir un deuxième signal (124) de suppression par une interface avec un deuxième dispositif (114) de contrôle, le deuxième signal (124) de suppression pouvant prendre un deuxième état d'autorisation, pour autoriser la commande de l'étage (102) final et un deuxième état de suppression, pour supprimer la commande de l'étage (102) final ;
une borne (136) de sortie, comme interface avec l'étage (102) final, et
un dispositif (138) de combinaison, qui est constitué pour mettre à dispositif de la borne (106) de sortie un signal (106) de commande, pour commander l'étage (102) final, si le signal (120) de validation a l'état de validation, le premier signal (122) de suppression, le premier état d'autorisation et le deuxième signal (124) de suppression, le deuxième état d'autorisation.

2. Système (116) suivant la revendication 1, dans lequel le dispositif (138) de combinaison est constitué pour ne pas mettre à dispositif le signal (106) de commande, si le signal (120) de validation a l'état de blocage et/ou si le premier signal (122) de suppression a le premier état de suppression et/ou si le deuxième signal (124) de suppression a le deuxième état de suppression.

3. Système (116) suivant l'une des revendications précédentes, dans lequel l'état de validation du signal (120) de validation représente un premier état logique, l'état de blocage du signal (120) de validation, un deuxième état logique, les états d'autorisation des signaux (122, 124) de suppression, le deuxième état logique et les états de suppression des signaux (122, 124) de suppression, le premier état logique.

4. Système (116) suivant l'une des revendications précédentes, dans lequel le dispositif (138) de combinaison a un premier interrupteur (242), un deuxième interrupteur (244) et un troisième interrupteur (246), le premier interrupteur (242) et le deuxième interrupteur (244) étant monté en série entre la borne (130) de validation et une borne de commande du troisième interrupteur (246), le troisième interrupteur (246) étant monté entre une borne (250) de tension d'alimentation pour la mise à disposition d'une tension d'alimentation pour faire fonctionner l'étage (102) final et la borne (136) de sortie, une borne de commande du premier interrupteur (242) est connectée à la première borne (132) de suppression et une borne de commande du deuxième interrupteur (244) est connectée à la deuxième borne (134) de suppression.

5. Système (116) suivant la revendication 4, dans lequel le premier interrupteur (242) et le deuxième interrupteur (244) sont réalisés sous la forme de transistors bipolaires et le troisième interrupteur (246), sous la forme d'un transistor à effet de champ ou d'un transistor bipolaire.

6. Système (116) suivant l'une des revendications 4 à 5, dans lequel le dispositif (138) de combinaison a une résistance (252), qui est montée entre la borne de commande du troisième interrupteur (246) et la borne (250) de tension d'alimentation.

7. Système (116) suivant l'une des revendications 4 à 6, dans lequel le dispositif (138) de combinaison a une première diode (254) et une deuxième diode (256), une borne (258) de circuit de sécurité du système (116) est connectée par la première diode (254) à la deuxième borne (134) de suppression et la deuxième borne (134) de suppression à la borne de commande du deuxième interrupteur (244) par la deuxième diode (256).

8. Système (116) suivant l'une des revendications précédentes, comprenant une borne (258) de circuit de sécurité pour recevoir un signal (260), qui peut prendre un état de blocage pour bloquer la commande de l'étage (102) final, le dispositif (138) de combinaison étant constitué de manière à ne pas mettre à disposition le signal (106) de commande, si le signal (260) a l'état de blocage.

9. Système (116) suivant l'une des revendications précédentes, comprenant au moins une autre borne (430) de validation pour recevoir un autre signal (420) de validation par une autre interface avec le dispositif (110) d'application ou avec un autre dispositif d'application, l'autre signal (420) de validation pouvant prendre un état de validation pour valider une commande d'un autre étage final et un état de blocage pour bloquer la commande de l'autre étage final, comprenant une autre borne (436) de sortie, comme interface avec l'autre étage final et dans lequel le dispositif (138) de combinaison est constitué de manière à mettre à disposition de l'autre borne (436) de sortie un autre signal (406) de commande pour commander l'autre étage final, si l'autre signal (420) de validation a l'état de validation, le premier signal (122) de suppression, le premier état d'autorisation et le deuxième signal (124) de suppression, le deuxième état d'autorisation.

10. Système (116) suivant la revendication 9, dans lequel le dispositif (138) de combinaison a un autre premier interrupteur (442), un autre deuxième interrupteur (444) et un autre troisième interrupteur (446), l'autre premier interrupteur (442) et l'autre deuxième interrupteur (444) étant montés en série entre l'autre borne (430) de validation et une borne de commande de l'autre troisième interrupteur (446), l'autre troisième interrupteur (446) étant monté entre la borne (250) de tension d'alimentation pour la mise à disposition d'une tension d'alimentation pour faire fonctionner l'autre étage final et l'autre borne (436) de sortie, une borne de commande de l'autre premier interrupteur (442) étant connectée à la première borne (132) de suppression et une borne de commande de l'autre deuxième interrupteur (244) étant connectée à la deuxième borne (134) de suppression.

11. Système (116) suivant l'une des revendications précédentes, comprenant au moins une autre borne (432) de suppression pour recevoir un autre signal (422) de suppression par une interface avec un autre dispositif de contrôle, dans lequel l'autre signal (422) de suppression peut prendre un autre état d'autorisation pour autoriser la commande de l'étage (102) final et un autre état de suppression pour supprimer la commande de l'étage (102) final et dans lequel le dispositif (138) de combinaison est constitué de manière à mettre à disposition de la borne (106) de sortie le signal (106) de commande pour commander l'étage (102) final, si, en outre, l'autre signal (422) de suppression a l'autre état d'autorisation.

12. Système (116) de commande d'un étage final d'un actionneur (104), notamment d'une électrovanne d'un véhicule (10), ayant les caractéristiques suivantes :
une borne (130) de validation, pour recevoir un signal (120) de validation par une interface avec un dispositif (110) d'application, le signal (120) de validation pouvant prendre un état de validation, pour valider une commande de l'étage (102) final et un état de blocage, pour bloquer la commande de l'étage (102) final ;
une première borne (132) de suppression, pour recevoir un premier signal (122) de suppression par une interface avec un dispositif (112) de contrôle, le premier signal (122) de suppression pouvant prendre un premier état d'autorisation, pour autoriser la commande de l'étage (102) final et un premier état de suppression, pour supprimer la commande de l'étage (102) final ;
une borne (136) de sortie, comme interface avec l'étage (102) final, et
un premier dispositif (138) de combinaison, qui est constitué de manière à mettre à disposition de la borne (106) de sortie un signal (106) de commande pour commander l'étage (102) final, si le signal (120) de validation a l'état de validation et si le signal (122) de suppression a l'état d'autorisation.

13. Procédé de commande d'un état final d'un actionneur (102), notamment d'une électrovanne d'un véhicule (100), dans lequel le procédé comprend les stades suivants :
réception (301) d'un signal (120) de validation par une interface avec un dispositif (110) d'application, le signal (120) de validation pouvant prendre un état de validation pour valider une commande de l'étage (102) final et un état de blocage pour bloquer la commande de l'étage (102) final ;
réception (303) d'un premier signal (122) de suppression par une interface avec un dispositif (122) de contrôle, le premier signal (122) de suppression pouvant prendre un premier état d'autorisation pour autoriser la commande de l'étage (102) final, et un premier état de suppression pour supprimer la commande de l'étage (102) final ;
réception (305) d'un deuxième signal (124) de suppression par une interface avec un dispositif (114) de contrôle de tension, le deuxième signal (124) de suppression pouvant prendre un deuxième état d'autorisation pour autoriser la commande de l'étage (102) final et un deuxième état de suppression pour supprimer la commande de l'étage (102) final et
mise à dispositif (307) d'un signal (106) de commande pour commander l'étage (102) final sur une borne de sortie servant d'interface avec l'étage (102) final, si le signal (120) de validation a l'état de validation, le premier signal (122) de suppression, le premier état d'autorisation et le deuxième signal (124) de suppression le deuxième état d'autorisation.

14. Circuit d'actionneur d'un véhicule (100), comprenant les caractéristiques suivantes :
un système (116) suivant l'une des revendications précédentes, pour commander l'étage (102) final,
un dispositif (110) d'application pour mettre le signal (120) de validation à disposition de la borne (130) de validation du système (116) ;
un dispositif (112) de contrôle pour mettre le premier signal (122) de suppression à disposition de la première borne (132) de suppression du système (116) ;
un dispositif (114) de contrôle de tension pour mettre le deuxième signal (124) de suppression à disposition de la deuxième borne (134) de suppression du système (116) et l'étage (102) final, une borne de l'étage (102) final étant connectée à la borne (136) de sortie du système (116).
